# EUROPEAN PATENT APPLICATION

(11) **EP 1 153 654 A1**
(43) Date of publication of application: **14.11.2001**
(21) Application number: 00430020.8
(22) Date of filing: 09.05.2000
(51) Int. Cl.: B01J 19/00, B01J 8/24

(54) **Supervision of chemical reactions**

(71) Applicant: BP Chemicals S.N.C., Cergy St. Christophe, 95866 Cergy Pontoise Cedex (FR)
(72) Inventor: Schoofs, Johannes, 41542 Dormagen (DE); Salz, Ernst, 50767 Köln (DE); Müller, Michael, 50769 Köln (DE)
(74) Representative: De Kezel, Eric

(57) **Abstract**

Chemical reactions can be supervised by using temperature sensors to monitor the wall temperature of the reaction vessel in which these reactions take place.
According to the invention these temperature sensors are inserted with an exact fit into openings that are made in the wall from outside so that 30 to 70% of the original wall thickness remains intact.

## Description

The present invention relates to a method of supervising chemical reactions by monitoring the temperature of the wall of the reaction vessel.

Highly exothermic or endothermic chemical reactions generally require very accurate monitoring of the temperature in the reaction vessel. This is often done using one or more thermometers inserted into the vessel in order to measure the temperature of the reaction mixture in the vessel, which can be liquid, gaseous or liquid or gaseous with swirling particles of solid matter. However, the addition of thermometers always implies the presence of glands or flanges which increase the cost of such a vessel in every case and during operation represent "dead" corners in which unwanted by-products can form and collect.

If the need to add a thermometer only becomes evident afterwards, expensive adaptation of the reaction vessel is required and, in every case where processing is done at an elevated pressure, it has to be followed by an additional and costly pressure test. These difficulties also apply in every case when miniaturised temperature sensors are affixed and instead of a gland or flange only require a simple hole in the wall of the vessel. It has been shown in many cases that it is sufficient merely to check the temperature of the wall of the reaction vessel instead of the temperature inside the actual reaction mixture. Indeed, in all cases where there is a risk of the internal wall of the reaction vessel becoming coated with a layer of by-products from the chemical reaction, measurement of the wall temperature of the reaction vessel is not only equal to measurement of the temperature within the reaction mixture, but is even a far more powerful method of supervision that monitoring the reaction mixture.

The coating of the internal walls of reaction vessels with the by-products of chemical reactions is a particular problem with reaction vessels for polymerisation reactions.

These coatings, which are often rubber-like in consistency and in many cases deeply coloured, can in the course of time become detached and ruin the whole reaction or, in the case of gas phase polymerisations, fall down and block the inlet glands for the monomers, catalyst and additional inert materials, thus disrupting the entire course of the polymerisation reaction so that it has to be interrupted. In such a case, if it was wished to drill through the wall and insert a temperature sensor, the problem described above of the need for a further expensive pressure test would still be there; furthermore the sensor that had been inserted through the reaction vessel wall and projected into the inside would form a "crystallisation point" for the wall coatings described above. It has therefore often been the practice when measuring the wall temperature of a reaction vessel to simply affix temperature sensors (using adhesive, for example) to the outside of the reaction vessel wall, but it was necessary to realise that as a general rule it is only possible to obtain a very diffuse temperature measurement, for when the temperature sensor is affixed in this way the temperature measurement is affected not only by the temperature of the inner wall, but also the temperature of the outer wall.

The present invention relates to a beneficial development of the methods of measuring the temperature walls of a reaction vessel and is characterised by only partially inserting a temperature sensor in the wall.
Without it being possible to predict it, this fully achieves the effect that can only otherwise be expected from a temperature sensor inserted through the wall into the inside, while at the same time overcoming the prejudice that the addition of an opening of this kind, only leading partly through the thickness of the wall, would mechanically weaken the strength of the wall at the place where the temperature sensor was inserted.

According to the invention such a loss of mechanical strength is at least partly overcome by the fact that the temperature sensor used is inserted into this opening with an exact fit.

The invention thus concerns a method of supervising chemical reactions by monitoring the wall temperature of the reaction vessel in which these reactions proceed, with the aid of temperature sensors and is characterised in that an opening that does not penetrate the whole of the wall thickness is made from the outside in the wall of the reaction vessel in such a way that 30 to 70% of the original thickness of the wall is retained, the temperature sensor is inserted into the opening with an exact fit and the signals from the temperature sensor are transmitted to a display device.

The method according to the invention can be executed in such a way that one or more openings with temperature sensors, preferably a number of openings with temperature sensors, are provided on the reaction vessel.

The cross-section of the opening provided for the temperature sensor can be basically any desired, for example cylindrical, rectangular, square, hexagonal or other. The temperature sensor to be inserted with an exact fit then obviously has the same shape as the cross-section. Precision fitting technology permits the manufacture of very accurately fitting temperature sensors for the prepared opening. However, other techniques can be used to improve the exactness of the fit. For example, the wall of the reaction vessel can be heated when it is being fitted with accurately fitting temperature sensors and the temperature sensor can be inserted into the prepared holes at a temperature that is lower. When the temperature sensor subsequently reaches the temperature of the wall it will expand slightly and then sit in the prepared hole with an exact fit. It is furthermore conceivable that the prepared holes are provided with a low melting point metal or a low melting point metal alloy (for example lead or soldering metal), the melting point of which is nevertheless higher than the temperature of the proposed chemical reaction.
If a heated temperature sensor is now introduced into an opening fitted with low melting point metal, the metal will melt and provide an exactly fitting seating. When temperature sensors are replaced, as in the event of a repair, the opposite procedure can be used. In a further and preferred version the prepared opening and the temperature sensor for it are made with a thread as for a nut and bolt, so that an exactly fitting seating can be achieved by screwing in firmly.

In every case the prepared opening does not occupy the whole of the thickness of the reaction vessel wall, but leaves 30 to 70%, preferably 40 to 60%, of the original wall thickness intact.

Basically any angle can be used between the prepared opening and temperature sensor and the reaction vessel wall. Thus it can be beneficial to make the opening lead obliquely from top to bottom, if the exactly seated temperature sensor is to be fitted in roughly the manner described above with a low melting point metal, so that this low melting point metal does not flow out of the opening prematurely. In a more advantageous manner however the axis of the opening and the temperature sensor is made at right angles to the reaction vessel wall. In the manner described above the opening and accurately fitting temperature sensor can be added to basically all reaction vessels in which a reaction is carried out in the liquid, gaseous or liquid-gaseous phase; in every case fine and finely divided solid bodies can be suspended in the fluid phase. The method according to the invention is applied in a special way in the monitoring of the wall temperature of gas phase polymerisation reactions, in which there is a particularly high risk of the formation of wall coatings with the consequences referred to above.

The method according to the present invention is particularly suitable for the manufacture of polymers in a continuous gas fluidised bed process.
Illustrative of the polymers which can be produced in accordance with the invention are the following:
SBR (polymer of butadiene copolymerised with styrene),
ABS (polymer of acrylonitrile, butadiene and styrene),
nitrile (polymer of butadiene copolymerised with acrylonitrile),
butyl (polymer of isobutylene copolymerised with isoprene),
EPR (polymer of ethylene with propylene),
EPDM (polymer of etylene copolymerised with propylene and a diene such as hexadiene, dicyclopentadiene or ethylidene norborene),
copolymer of ethylene and vinyltrimethoxy silane, copolymer of ethylene and one or more of acrylonitrile, maleic acid esters, vinyl acetate, acrylic and methacrylic acid esters and the like

In an advantageous embodiment of this invention, the polymer is a polyolefin preferably copolymers of ethylene and/or propylene and/or butene. Preferred alpha-olefins used in combination with ethylene and/or propylene and/or butene in the process of the present invention are those having from 4 to 8 carbon atoms. However, small quantities of alpha olefins having more than 8 carbon atoms, for example 9 to 40 carbon atoms (e.g. a conjugated diene), can be employed if desired. Thus it is possible to produce copolymers of ethylene and/or propylene and/or butene with one or more C4-C8 alpha-olefins. The preferred alpha-olefins are but-1-ene, pent-1-ene, hex-1-ene, 4-methylpent-1-ene, oct-1-ene and butadiene. Examples of higher olefins that can be copolymerised with the primary ethylene and/or propylene monomer, or as partial replacement for the C4-C8 monomer are dec-1-ene and ethylidene norbornene. According to a preferred embodiment, the process of the present invention preferably applies to the manufacture of polyolefins in the gas phase by the copolymerisation of ethylene with but-1-ene and/or hex-1-ene and/or 4MP-1.

The process according to the present invention may be used to prepare a wide variety of polymer products for example linear low density polyethylene (LLDPE) based on copolymers of ethylene with but-1-ene, 4-methylpent-1-ene or hex-1-ene and high density polyethylene (HDPE) which can be for example copolymers of ethylene with a small portion of higher alpha olefin, for example, but-1-ene, pent-1-ene, hex-1-ene or 4-methylpent-1-ene.

The process is particularly suitable for polymerising olefins at an absolute pressure of between 0.5 and 6 MPa and at a temperature of between 30°C and 130°C. For example for LLDPE production the temperature is suitably in the range 75-95°C and for HDPE the temperature is typically 80-110°C depending on the activity of the catalyst used and the polymer properties desired.

The polymerisation is preferably carried out continuously in a vertical fluidised bed reactor according to techniques known in themselves and in equipment such as that described in European patent application EP-0 855 411, French Patent No. 2,207,145 or French Patent No. 2,335,526. The process of the invention is particularly well suited to industrial-scale reactors of very large size.

The polymerisation reaction may be carried out in the presence of a catalyst system of the Ziegler-Natta type, consisting of a solid catalyst essentially comprising a compound of a transition metal and of a cocatalyst comprising an organic compound of a metal (i.e. an organometallic compound, for example an alkylaluminium compound). High-activity catalyst systems have already been known for a number of years and are capable of producing large quantities of polymer in a relatively short time, and thus make it possible to avoid a step of removing catalyst residues from the polymer. These high-activity catalyst systems generally comprise a solid catalyst consisting essentially of atoms of transition metal, of magnesium and of halogen. The process is also suitable for use with Ziegler catalysts supported on silica. The process is also especially suitable for use with metallocene catalysts in view of the particular affinity and reactivity experienced with comonomers and hydrogen. The process can also be advantageously applied with the iron and/or cobalt complexes catalysts, e.g. such as those disclosed in WO98/27124 or in WO99/12981. It is also possible to use a high-activity catalyst consisting essentially of a chromium oxide activated by a heat treatment and associated with a granular support based on a refractory oxide.

The catalyst may suitably be employed in the form of a prepolymer powder prepared beforehand during a prepolymerisation stage with the aid of a catalyst as described above. The prepolymerisation may be carried out by any suitable process, for example, polymerisation in a liquid hydrocarbon diluent or in the gas phase using a batch process, a semi-continuous process or a continuous process.

Furthermore, the invention concerns a device for the supervision of chemical reactions by monitoring the wall temperature of the reaction vessels in which these reactions take place with the aid of temperature sensors, consisting of:
a) an opening made in the reaction vessel wall from outside which does not lead through the whole of the wall thickness but leaves 30 to 70% of the original wall thickness intact,
b) a temperature sensor inserted into the opening with an exact fit and
c) a known display device to which the signals from the temperature sensor are transmitted.

In a preferred way this device is characterised in that the opening according to a) which does not pass through the entire wall thickness is a thread cut from outside into which the temperature sensor, which is also provided with a thread, is screwed with an exact fit.

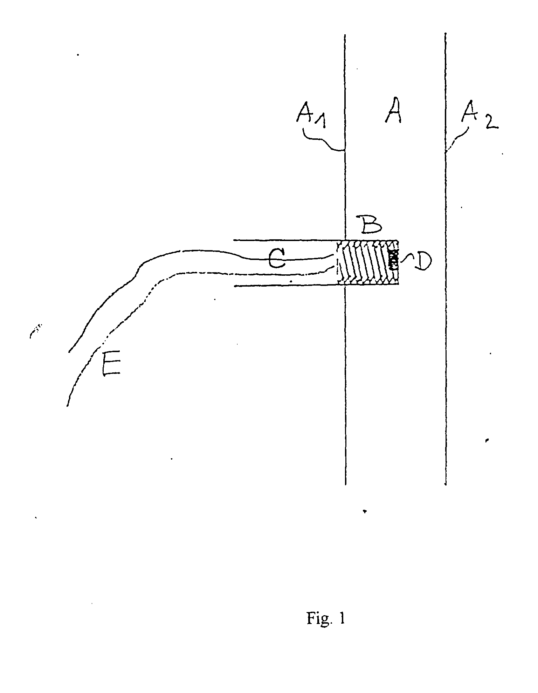

The example of the last-named form of execution of the device according to the invention can be explained in greater detail with reference to Fig. 1: here A represents the wall of a reaction vessel with an outer side A₁ and an inner side A₂. An opening B leading only partly through this wall A is cut in the form of a thread, for example. The temperature sensor C, also made with a thread, is screwed into this cut thread B to give an exact fit. At its front end it contains the actual heat-sensitive thermoelement D, which transmits its signal via the cable E to a remote display device.

## Claims

1. Method of supervising chemical reactions by monitoring the wall temperature of the reaction vessel in which these reactions proceed, with the aid of temperature sensors, **characterised in that** an opening that does not penetrate the whole of the reaction vessel wall thickness is made from the outside in the wall of the reaction, the temperature sensor is inserted into the opening with an exact fit and the signals from the temperature sensor are transmitted to a display device.

2. Method according to claim 1, **characterised in that** the opening that does not penetrate the whole of the reaction vessel wall thickness is made in such a way that 30 to 70% of the original thickness of the wall is retained.

3. Method according to any of the preceding claims, **characterised in that** more than one opening with a temperature sensor is made in the wall.

4. Method according to any of the preceding claims, **characterised in that** the opening is designed as a thread and the exactly fitting insertion of the temperature sensor is achieved by screwing in firmly as far as the stop.

5. Method according to claim 2, **characterised in that** 40 to 60% of the original wall thickness remains intact.

6. Method according to any of the preceding claims, **characterised in that** the axis of the opening is at right angles to the wall.

7. Method according to any of the preceding claims, **characterised in that** the reaction vessel is a gas phase polymerisation reactor.

8. Device for the supervision of chemical reactions by monitoring the wall temperature of the reaction vessel in which these reactions proceed, with the aid of temperature sensors consisting of:
a) an opening made in the reaction vessel wall from outside which does not lead through the whole of the wall thickness but leaves 30 to 70% of the original wall thickness intact,
b) a temperature sensor inserted into the opening with an exact fit and
c) a known display device to which the signals from the temperature sensor are transmitted.

9. Device according to claim 8, **characterised in that** the opening according to a) which does not pass through the entire wall thickness is a thread cut from outside into which the temperature sensor, which is also provided with a thread, is screwed with an exact fit.
